## Europäisches Patentamt
## European Patent Office
## Office européen des brevets

(19)

(11) Numéro de publication: **0 114 132**
**A1**

(12)

# DEMANDE DE BREVET EUROPEEN

(21) Numéro de dépôt: **84400046.3**

(22) Date de dépôt: **10.01.84**

(51) Int. Cl.³: **B 62 D 53/08**

(30) Priorité: **14.01.83 FR 8300530**

(43) Date de publication de la demande: **25.07.84**
**Bulletin 84/30**

(84) Etats contractants désignés: **DE GB IT NL**

(71) Demandeur: **RENAULT VEHICULES INDUSTRIELS**
**Société dite:, 129 Rue Servient, F-69003 Lyon (FR)**

(72) Inventeur: **Modat, Bernard, Pins et Chassons,**
**F-38200 Villette de Vienne (FR)**

(74) Mandataire: **Réal, Jacques, Régie Nationale des Usines**
**Renault SCE 0804, F-92109 Boulogne Billancourt Cedex**
**(FR)**

(54) Dispositif de liaison d'un tracteur à une semi-remorque.

(57) La présente invention a pour objet un dispositif de liaison tracteur semi-remorque, comprenant de manière habituelle une sellette liée au tracteur et adaptée à recevoir l'organe complémentaire de support de la semi-remorque.

La sellette (15) est directement supportée et suspendue sur le pont arrière (2) du tracteur dont le châssis est, de manière habituelle, suspendu par des ressorts (6) sur le pont arrière (12) de ce tracteur.

Application à l'amélioration de la qualité et du confort de suspension du tracteur et de sa cabine et au découplage des vibrations transmises au châssis de ce tracteur.

0114132

DISPOSITIF DE LIAISON D'UN TRACTEUR
A UNE SEMI-REMORQUE

La présente invention se rapporte à un dispositif de liaison d'un tracteur à une semi-remorque, ce dispositif comprenant, de manière connue, une
sellette solidaire du tracteur, sur laquelle vient reposer la partie avant
de la semi-remorque.

On sait que la suspension d'un tracteur de semi-remorque doit prendre
en compte des conditions contradictoires : assurer une tenue de route satisfaisante quel que soit le chargement de l'ensemble et de plus, assurer la suspension du tracteur roulant en solo aussi bien que celle de l'ensemble à
pleine charge, ce qui impose une suspension suffisamment dure.

Par ailleurs, les tracteurs de semi-remorques sont soumis lors du roulage à un mouvement appelé "moutonnement". Ce mouvement correspond à un galop
de l'ensemble du véhicule et nuit au confort vibratoire du poste de conduite.

Des études détaillées ont montré que la semi-remorque, par ses caractéristiques de masses, inerties et raideurs de suspension, était la cause de ce
mouvement de moutonnement.

Le fait d'isoler la caisse de la semi-remorque du chassis par un étage
de suspension n'a jamais permis de réaliser les progrès souhaités. Suspendre
ainsi la semi-remorque revient à découpler les mouvements vibratoires du tracteur et ceux de la semi-remorque. Cela équivaut pour le véhicule à un roulage

0114132

à vide et donc à un comportement dynamique très désagréable.

Le dispositif de liaison tracteur-semi remorque selon l'invention, comprenant de manière habituelle une sellette liée au tracteur et adaptée à recevoir l'organe complémentaire de support de la semi-remorque est caractérisé en ce que cette sellette est directement supportée et suspendue sur le pont arrière du tracteur dont le chassis est de manière habituelle, suspendu par des ressorts sur le pont arrière de ce tracteur.

Selon une autre caractéristique de l'invention, la sellette est articulée autour d'un axe transversal à une embase directement fixée au pont par l'intermédiaire d'au moins une colonne traversant le chassis du tracteur, un étage de suspension étant disposé entre la sellette et ladite embase

De manière avantageuse, la suspension du pont arrière du tracteur au chassis comprend, de chaque côté, un demi ressort à lames articulé par sa partie arrière au chassis par l'intermédiaire de biellettes , et fixé par sa partie avant à une bielle dont l'extrémité avant est articulée à son tour au chassis, tandis que des bras sensiblement parallèles aux dites bielles relient, de manière articulée, l'embase au chassis.

Grâce à ces dispositions, le chassis du tracteur est isolé des mouvements parasites de la semi-remorque.

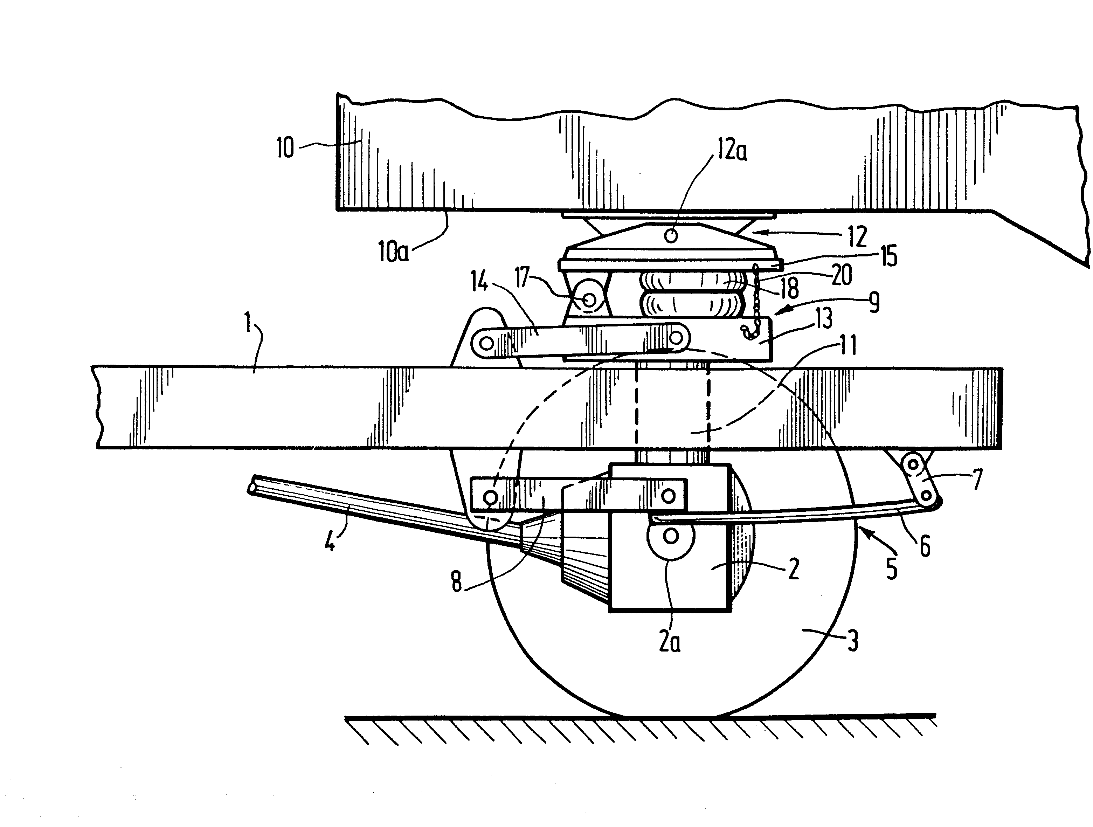

D'autres buts, caractéristiques et avantages de l'invention ressortiront de la description suivante, donnée seulement à titre d'exemple non limitatif, en référence au dessin annexé dont la figure unique est une vue schématique, en élévation, d'une forme de réalisation du dispositif de liaison selon l'invention.

Le tracteur, non représenté dans son ensemble, comporte un chassis 1 et, à la partie arrière de celui-ci, un pont moteur 2 pour l'entrainement des roues motrices 3 (le train de roues gauche a été enlevé pour plus de clarté), d'où part un arbre de transmission 4 vers le groupe motopropulseur (non représenté).

Le pont 2 est suspendu au chassis 1 par des suspensions 5, comportant chacune ici un demi ressort à lames 6 articulé à l'arrière, par une biellette 7 au chassis et fixé par l'avant à la partie arrière d'une bielle 8, elle-même articulée par l'avant au chassis 1 et fixée au tube de pont 2a.

Une sellette 9 qui, de manière habituelle, reçoit l'élément complémentaire de support 12 de la semi-remorque 10, est directement fixée au pont 2 par des colonnes 11.

La sellette 9 comprend une embase 13 fixée à la partie supérieure des colonnes 11 et reliée par l'intermédiaire de bras 14, sensiblement parallèles aux bielles 8, du chassis 1. Une plaque 15, formant la sellette proprement dite, est disposée au dessus de l'embase 13 à laquelle elle est articulée autour d'un axe transversal 17 ; cette plaque 15 est espacée de l'embase 13 et un étage de suspension 18 constitué par exemple d'un coussin pneumatique, occupe l'intervalle existant entre la plaque 15 et l'embase 13.

Lorsque la semi-remorque 10 repose sur la sellette 15, l'étage de suspension 18 est comprimé (cas de la figure). Un limiteur de débattement, par exemple une chaine 20, reliant l'embase 13 et la plaque 15, limite l'ouverture de cette plaque lorsque la sellette est déchargée.

Grâce à la liaison directe de la sellette 9 au pont du tracteur, le chassis 1 de ce dernier est isolé des mouvements parasites de la semi-remorque. On voit que toute charge, statique ou dynamique, exercée par la semi-remorque sur la sellette n'a pas d'action directe sur le chassis. De la sorte la charge supportée par les ressorts arrière 6 du tracteur ne varie pas et il est ainsi possible, grâce à la diminution de la charge sur le tracteur, d'améliorer le confort de ce véhicule à l'état non chargé.

Le rôle de l'étage de suspension 18 est d'assurer la suspension de la masse principale portant sur le pont 12 et constituée par la partie avant de la semi-remorque 10.

Le tracteur ne porte plus directement la charge, mais par contre, il la tracte toujours et les efforts de tractions sont repris par les bielles 8 et les bras 14

Le tracteur est lié aux roues 3 par l'intermédiaire des suspensions 5. Il est intéressant de noter que ces suspensions ne supportent pas la masse du chargement : elles seront donc plus souples, ce qui conduit à un meilleur confort tant à vide qu'en charge. On parvient également à une meilleure isolation vibratoire pour tous les accessoires fixés au chassis et on assure une assiette constante du véhicule, ce qui se traduit par un meilleur fonctionnement de la chaine cinématique constituée par la transmission, le pont moteur et la direction du tracteur.

Cette liaison selon l'invention permet en outre la suppression de la suspension cabine du tracteur.

Ainsi, on peut mettre à l'actif du dispositif de liaison selon l'invention :

- un comportement dynamique du tracteur chargé amélioré grâce à l'isolation des mouvements inertiels de la semi-remorque ;
- un meilleur confort à vide également, grâce à la charge constante supportée par le tracteur ;
- la possibilité de supprimer la suspension de la cabine du tracteur, le confort étant cependant supérieur à celui d'une cabine à suspen-

4

sion souple (1 Hz de fréquence de rebond) ; 0114132

- et parmi des avantages annexes, la diminution du moment de flexion du chassis et aussi de la charge maximale des ressorts arrière.

Bien entendu, l'invention n'est pas limitée aux modes de réalisation décrits et représentés et elle est susceptible de nombreuses variantes, accessibles à l'homme de l'art, sans que l'on ne s'écarte de l'esprit de l'invention.

Ainsi on comprend que l'élément de support 12 de la semi-remorque 10 comporte un axe d'articulation transversal 12a sur lequel est articulée une plaque d'attellage supportant la plaque 10a du col de cygne de la remorque 10 et recevant le crochet d'attellage (non représenté) de la semi-remorque.

De même, l'embase 13 de la sellette 15 fixée rigidement au pont 2, est articulée au chassis 1 du tracteur par des bras 14, tandis que les tubes de sortie 12a du pont 2 sont articulés chacun par au moins une bielle 8 au chassis du tracteur, les bras 14 et les bielles 8 étant disposés de façon sensiblement parallèles et parallèlement à l'axe général du chassis 1 dans sa position moyenne, de façon à constituer un parallèlogramme de liaison de l'ensemble de la sellette 15 et du pont 2 au chassis 1 du tracteur, ledit parallèlogramme étant apte à transmettre au chassis 1 les couples et les efforts résultants exercés par le pont 2 et par la semi-remorque 10.

REVENDICATIONS          0114132

1. Dispositif de liaison tracteur semi-remorque, comprenant de manière habituelle une sellette liée au tracteur et adaptée à recevoir l'organe complémentaire de support de la semi-remorque, caractérisé en ce que cette sellette (15) est directement supportée et suspendue sur le pont arrière(2) du tracteur dont le chassis est de manière habituelle, suspendu par des ressorts (6) sur le pont arrière (12) de ce tracteur.

2. Dispositif de liaison selon la revendication 1, caractérisé en ce que la sellette (15)est articulée autour d'un axe transversal (17) à une embase(13) directement fixée au pont (2) par l'intermédiaire d'au moins une colonne (11) traversant le chassis(1)du tracteur, un étage de suspension(18)étant disposé entre la sellette et ladite embase (13).

3. Dispositif de liaison selon la revendication 2, caractérisé en ce que la suspension(5)du pont arrière du tracteur au chassis comprend, de chaque côté, un demi ressort à lames (6)articulé par sa partie arrière au chassis(1) par l'intermédiaire de biellettes(7), et fixé par sa partie avant à une bielle(8)dont l'extrémité avant est articulée à son tour au chassis, tandis que des bras(14) sensiblement parallèles aux dites bielles(8)relient, de manière articulée, l'embase (13) au chassis.

4. Dispositif de liaison selon la revendication 2 ou 3, caractérisé en ce que l'embase (13) de la sellette (15) fixée rigidement au pont (2) est articulée au chassis (1) du tracteur par des bras (14) tandis que les tubes de sortie (12a) du pont (2) sont articulés chacun par au moins une bielle (8) au chassis (1) du tracteur, les bras (14) et les bielles (8) étant disposés de façon sensiblement parallèles et parallèlement à l'axe général du chassis (1) dans sa position moyenne, de façon à constituer un parallélogramme de liaison de l'ensemble de sa sellette (15) et du pont (2) au chassis (1) du tracteur, ledit parallélogramme étant apte à transmettre au chassis (1) les couples et les efforts résultants exercés par le pont (2) et par la semi-remorque (10).

0114132

Office européen
des brevets

**RAPPORT DE RECHERCHE EUROPEENNE**

0114132
Numéro de la demande

EP 84 40 0046

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | US-A-2 968 496 (GOUIRAND) * colonne 1, lignes 57-62; figure 1 * | 1 | B 62 D 53/08 |
| X | GB-A- 196 824 (HUGH) * figures 1,2 * | 1 | |
| X | GB-A- 199 890 (HUGH) * figure 2 * | 1 | |
| A | FR-A-2 306 861 (BRITISH LEYLAND) * en entier * | 1 | |
| A | GB-A-2 037 685 (BRITISH LEYLAND) * en entier * | 1 | DOMAINES TECHNIQUES RECHERCHES (Int. Cl. ³) |
| A | US-A-4 149 606 (HAWK) | | B 62 D 53/08 |
| A | FR-A- 743 710 (LAGACHE) | | |
| A | FR-A-1 324 996 (DUNLOP) | | |

Le présent rapport de recherche a été établi pour toutes les revendications

| Lieu de la recherche | Date d'achèvement de la recherche | Examinateur |
|---|---|---|
| LA HAYE | 22-03-1984 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

OEB Form 1503. 03.82